(19)

Europäisches
Patentamt
European
Patent Office
Office européen
des brevets

(11) **EP 3 382 911 A1**

(12) **EUROPEAN PATENT APPLICATION**

(43) Date of publication:
03.10.2018 Bulletin 2018/40

(51) Int Cl.:
$H04B\ 10/50$ $^{(2013.01)}$   $H01S\ 5/00$ $^{(2006.01)}$
$H04B\ 10/54$ $^{(2013.01)}$   $H04B\ 10/572$ $^{(2013.01)}$

(21) Application number: 17164387.7

(22) Date of filing: 31.03.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Nokia Solutions and Networks Oy
02610 Espoo (FI)

(72) Inventors:
• **Pöhlmann, Wolfgang**
**70435 Stuttgart (DE)**
• **Borkowski, Robert**
**70435 Stuttgart (DE)**

(74) Representative: **Louis Pöhlau Lohrentz**
**Patentanwälte**
**Postfach 30 55**
**90014 Nürnberg (DE)**

(54) **METHODS AND APPARATUS FOR TRANSMITTING AND RECEIVING BURST DATA**

(57)   The present invention discloses a method of transmitting and receiving burst data in an optical network. The signal that is to be transmitted comprises a preamble signal with a duration of a first time $t_1$ and a payload signal comprising user data.

Wherein, an electrical energy delivered by the preamble signal from a beginning of the preamble signal to a second time $t_2$ is less than an electrical energy delivered by a normal preamble signal from a beginning of the predetermined preamble signal to the second time $t_2$, $0 < t_2 \leq t_1$, the normal preamble signal having a duration of the first time $t_1$, comprising a repeated sequence composed of logical "1"(s) and logical "0"(s); wherein, the logical "1" and logical "0" in the normal preamble signal have same current amplitude as those in the payload signal.

Fig. 3

**Description**

Field of the invention

The invention relates to communication technology, in particular to burst data transmission in an optical communication system.

Background

Time- and wavelength-division multiplexed passive optical network (TWDM-PON) is the solution of choice for the next-generation passive optical network stage 2 (NG-PON2) systems. TWDM-PON is based on two multiplexing aspects: a) time-domain multiplexing of optical bursts from multiple transmitters, and b) wavelength division multiplexing allowing stacking multiple time division multiplexed sub- passive optical networks (PON) in wavelength domain.

Due to aspect a), the transmitter in a TWDM-PON system is only active for the duration of the burst transmission. Due to b) the system requires optical filters (e.g., 40 GHz passband filter for 100 GHz grid spacing) to separate the traffic arriving at different wavelength from multiple optical network units (ONU) over the feeder fiber section to individual optical line terminal (OLT) receivers.

A typical ONU transmitter employs a distributed feedback (DFB) laser as the optical transmitter. One of the fundamental properties of the DFB laser is that the optical emission frequency of such laser depends on the device temperature. Due to aforementioned time-multiplexing aspect, the data transmission is performed in bursts. When the transmitter becomes active, the drive current with non-zero mean is applied to the transmitter laser, which in turn leads to heat dissipation on the internal resistance of the device. This results in heating of the laser chip by its own drive current, so-called self-heating, which continuously alters the optical emission frequency of the laser during the burst emission, until thermal equilibrium is achieved. When no burst is being transmitted, the laser is switched off, the extra heat is dissipated and the laser is cooling again. Therefore, a typical burst mode operation consists of a repetition of the laser operating in on and off state, leading to a repeated frequency drift behaviour.

The frequency drift has two domains. The first domain is the fast blue shift, starting from the beginning of the burst with an increasing optical frequency. The second domain is the slow red shift, with a decreasing frequency to the end of the burst.

It is known that the laser self-heating-induced slow red shift can be mitigated by use of an on-chip resistor to quickly heat up the laser diode if no burst is emitted in order to keep the chip temperature constant. One possible implementation of this mitigation is the so-called counter-heating. This means that the heater is switched on when the laser is not emitting a burst and switched off when the laser emits a burst. In this way the laser temperature is intended to be kept constant all the time and thus no significant wavelength drift is observed. However thermal drift compensation using an on-chip resistor (or similar techniques relying on thermal effects) acts on timescales comparable to the repetition time of the burst and therefore are unable to compensate rapid drift effects, in particular the fast blue shift effect. Therefore, up to now, no mitigation strategy was proposed.

G. Simon et al., "Focus on Time-Dependent Wavelength Drift of DMLs Under Burst-Mode Operation for NG-PON2," in Journal of Lightwave Technology, vol. 34, no. 13, pp. 3148-3154, 2016 discusses instead two drift avoidance strategies, whose aim is to reduce the system impact of the frequency drift, however this does not mitigate the actual effect. One proposal is to increase the channel spacing from 100 GHz to 200 GHz, which has the drawback of reduced spectral efficiency and would reduce the number of usable WDM channels from 8 to 4. The other proposal is to send padding data ahead of the preamble to warm up the laser and reach the in-band frequency during the padding, which limits the usable traffic drastically, especially for short bursts.

Summary of the Invention

An object of the invention is to mitigate the blue shift effect and thereby reduce the total frequency excursion.

The object of the invention is achieved by the methods and apparatus in the claims.

According to one aspect of the invention, there is provided a method of transmitting burst data in an optical network unit, comprising steps of: transmitting a preamble signal with a duration of a first time $t_1$ to an optical line terminal; transmitting a payload signal comprising user data after the preamble signal to the optical line terminal; wherein, logical "1"s in the payload signal have a current amplitude of a first value $A_1$, and logical "0"s in the payload signal have a current amplitude of a second value $A_2$, $A_2 < A_1$; wherein, an electrical energy delivered by the preamble signal from a beginning of the preamble signal to a second time $t_2$ is less than an electrical energy delivered by a normal preamble signal from a beginning of the predetermined preamble signal to the second time $t_2$, $0 < t_2 \leq t_1$; the normal preamble signal having a duration of the first time $t_1$, comprising a repeated sequence composed of logical "1"(s) and logical "0"(s); wherein, the logical "1" and logical "0" in the normal preamble signal have same current amplitude as those in the payload signal.

In a preferred embodiment, the electrical energy delivered by the preamble signal from a beginning of the preamble signal to the second time $t_2$ is corresponding to an electrical energy delivered by a predetermined preamble signal from a beginning of the predetermined preamble signal to the second time $t_2$, the predetermined preamble signal having a duration of the first time $t_1$, comprising a repeated sequence composed of logical "1"(s) and logical "0"(s); a current amplitude of the logical "0" in the predetermined preamble signal increasing from a third value $A_3$ at the beginning of the predetermined preamble signal to the second value $A_2$ at a third time $t_3$ and being constant at the second value $A_2$ after the third time $t_3$, and a current amplitude of the logical "1" in the predetermined preamble signal increasing from a fourth value $A_4$ at the beginning of the predetermined preamble signal to the first value $A_1$ at a fourth time $t_4$ and being constant at the first value $A_1$ after the fourth time $t_4$, wherein, $t_3 \leq t_4 \leq t_1$, $A_3 \leq A_2$, for $A_4 < A_1$, and $A_3 < A_2$, for $A_4 = A_1$.

In a preferred embodiment, the current amplitude of the logical "1" in the predetermined preamble signal increases according to a function:

$$A(t_{l1}) = \begin{cases} A_4 + (A_1 - A_4)\log_b[(b-1)(t_{l1}/t_4)+1] & \text{for } b > 0, b \neq 1 \\ A_4 + (A_1 - A_4)(t_{l1}/t_4) & \text{for } b = 1 \end{cases},$$

where $t_{l1}$ is a time of occurrence of a logical "1" from the beginning of the predetermined preamble and $b$ is an arbitrary positive constant.

In a preferred embodiment, the current amplitude of the logical "0" in the predetermined preamble signal increases according to a function:

$$A(t_{l0}) = \begin{cases} A_3 + (A_2 - A_3)\log_d[(d-1)(t_{l0}/t_3)+1] & \text{for } d > 0, d \neq 1 \\ A_3 + (A_2 - A_3)(t_{l0}/t_3) & \text{for } d = 1 \end{cases},$$

where $t_{l0}$ is a time of occurrence of a logical "0" from the beginning of the predetermined preamble and $d$ is an arbitrary positive constant.

In a preferred embodiment, the current amplitude of the logical "1" in the predetermined preamble signal increases according to a function;

$$A(t_{l1}) = A_4 + (A_1 - A_4)(1+p)\left[1 - \left(\frac{p}{1+p}\right)^{(t_{l1}/t_4)}\right],$$

where $t_{l1}$ is a time of occurrence of a logical "1" from the beginning of the predetermined preamble and $p$ is an arbitrary constant $p \neq 0$.

In a preferred embodiment, the current amplitude of the logical "0" in the predetermined preamble signal increases according to the function:

$$A(t_{l0}) = A_3 + (A_2 - A_3)(1+q)\left[1 - \left(\frac{q}{1+q}\right)^{(t_{l0}/t_3)}\right],$$

where $t_{l0}$ is a time of occurrence of a logical "0" from the beginning of the predetermined preamble and $q$ is an arbitrary constant $q \neq 0$.

In a preferred embodiment, wherein, $A_3 = A_4$.

In a preferred embodiment, the repeated sequence comprised in the predetermined preamble signal is "10".

In a preferred embodiment, the preamble signal is same as the predetermined preamble signal.

In a preferred embodiment, the preamble signal comprises less logical "1"s than logical "0"s, where the logical "1"s in the preamble signal have a current amplitude of the first value $A_1$ and the logical "0"s in the preamble signal have a current amplitude of the second value $A_2$.

According another aspect of the invention, there is provided a method of receiving burst data in an optical line terminal, comprising steps of: receiving a preamble signal with a duration of a first time $t_1$ from an optical network unit;

receiving a payload signal comprising user data after the preamble signal from the optical network unit; wherein, an electrical energy delivered by the preamble signal from a beginning of the preamble signal to a second time $t_2$ is less than an electrical energy delivered by a normal preamble signal from a beginning of the predetermined preamble signal to the second time $t_2$, $0<t_2 \le t_1$, the normal preamble signal comprising a repeated sequence composed of logical "1 "(s) and logical "0"(s); wherein, the logical "1" and logical "0" in the normal preamble signal have same current amplitude as those in the payload signal.

In a preferred embodiment, the electrical energy delivered by the preamble signal from a beginning of the preamble signal to a second time $t_2$ is corresponding to an electrical energy delivered by a predetermined preamble signal from a beginning of the predetermined preamble signal to the second time $t_2$, $0<t_2 \le t_1$, the predetermined preamble signal having a duration of the first time $t_1$, comprising a repeated sequence composed of logical "1"(s) and logical "0"(s); a current amplitude of the logical "0" in the predetermined preamble signal increasing from a third value $A_3$ at the beginning of the predetermined preamble signal to the second value $A_2$ at a third time $t_3$ and being constant at the second value $A_2$ after the third time and a current amplitude of the logical "1" in the predetermined preamble signal increasing from a fourth value $A_4$ at the beginning of the predetermined preamble signal to the first value $A_1$ at a fourth time $t_4$ and being constant at the first value $A_1$ after the fourth time $t_4$, wherein, $t_3<t_4 \le t_1$, $A_3 \le A_2$, for $A_4< A_1$ and $A_3< A_2$, for $A_4= A_1$. the method further comprising a step of: determining a threshold for sampling the payload signal based on the current amplitude of the logical "1"s in the preamble signal no earlier than $t_4$ and the current amplitude of logical "0"s in the preamble signal no earlier than $t_3$.

In a preferred embodiment, the method further comprising a step of: determining a clock phase for the payload signal according to the logical "1"s comprised in the preamble signal.

According another aspect of the invention, there is provided an optical network unit, configured to: transmit a preamble signal with a duration of a first time $t_1$ to an optical line terminal; transmit a payload signal comprising user data after the preamble signal to the optical line terminal; wherein, logical "1"s in the payload signal have a current amplitude of a first value $A_1$, and logical "0"s in the payload signal have a current amplitude of a second value $A_2$, $A_2 < A_1$; wherein, an electrical energy delivered by the preamble signal from a beginning of the preamble signal to a second time $t_2$ is less than an electrical energy delivered by a normal preamble signal from a beginning of the predetermined preamble signal to the second time $t_2$, $0<t_2 \le t_1$; the normal preamble signal having a duration of the first time $t_1$, comprising a repeated sequence composed of logical "1"(s) and logical "0"(s); wherein, the logical "1" and logical "0" in the normal preamble signal have same current amplitude as those in the payload signal.

According another aspect of the invention, there is provided an optical line terminal, configured to: receive a preamble signal with a duration of a first time $t_1$ from an optical network unit; receive a payload signal comprising user data after the preamble signal from the optical network unit; wherein, an electrical energy delivered by the preamble signal from a beginning of the preamble signal to a second time $t_2$ is less than an electrical energy delivered by a normal preamble signal from a beginning of the predetermined preamble signal to the second time $t_2$, $0<t_2 \le t_1$, the normal preamble signal comprising a repeated sequence composed of logical "1"(s) and logical "0"(s); wherein, the logical "1" and logical "0" in the normal preamble signal have same current amplitude as those in the payload signal.

According to the present invention, the fast blue shift is mitigated, and the frequency drift is reduced. Therefore, there is no need to increase channel spacing or pad before preamble to reduce the impact of the frequency drift on the system. The resource in the system may be used more efficiently. The traffic that can be transmitted in a TWDM-PON system may be increased.

Brief description of the figures

The features and advantages of the invention will be more completely understood by appreciating the following detailed description of preferred embodiments with reference to the figures, wherein

Fig. 1 depicts a schematic amplitude diagram of a data burst using a normal preamble;
Fig. 2 depicts a schematic frequency diagram of an optical frequency measurement result for a data burst using a normal preamble according to Fig.1;
Fig. 3 depicts a schematic envelope amplitude diagram of a data burst using a predetermined preamble according to an embodiment of the invention;
Fig. 4 depicts a schematic amplitude diagram of a data burst using a preamble signal according to an embodiment of the invention;
Fig. 5 depicts a schematic frequency diagram of an optical frequency measurement result for a data burst using the preamble signal according to Fig.4;
Fig. 6 depicts a schematic amplitude diagram of a preamble signal according to another embodiment of the invention;
Fig. 7 depicts a schematic frequency diagram of an optical frequency measurement result for a data burst using the preamble signal according to Fig. 6.

Detailed description

Exemplary embodiments of the present application are described herein in detail and shown by way of example in the drawings. It should be understood that, although specific exemplary embodiments are discussed herein there is no intent to limit the scope of the invention to such embodiments. To the contrary, it should be understood that the exemplary embodiments discussed herein are for illustrative purposes, and that modified and alternative embodiments may be implemented without departing from the scope of the invention. Similarly, specific structural and functional details disclosed herein are merely representative for purposes of describing the exemplary embodiments. The invention described herein, however, may be embodied in many alternate forms and should not be construed as limited to only the embodiments set forth herein.

Normally, an ONU in the TWDM-PON architecture is configured to transmit a preamble signal with a duration of a first time $t_1$ to an OLT; and transmit a payload signal comprising user data after the preamble signal to the OLT.

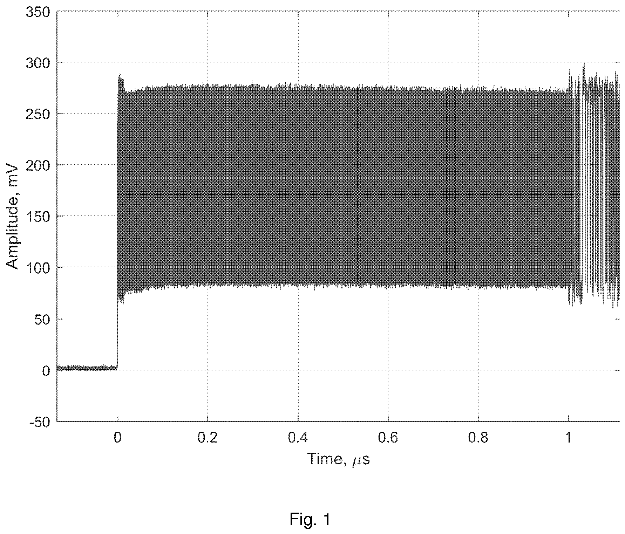

Fig. 1 depicts a schematic amplitude diagram of a data burst using a normal preamble.

Typically a normal preamble signal consists of a repeated sequence composed of logical "1"(s) and logical "0"(s); wherein, the logical "1" and logical "0" in the normal preamble signal have same current amplitude as those in the payload signal. In the example shown in Fig. 1, the logical "1"s in the normal preamble signal and the payload signal have a current amplitude of a first value $A_1$, and logical "0"s in the normal preamble signal and the payload signal have a current amplitude of a second value $A_2$, $A_2 < A_1$. The normal preamble starts with a nominal and constant amplitude of "1"s and keeps this amplitude constant during the entire burst (rectangular shape). Although the voltage amplitude is shown in the figures, a skilled person shall understand, the voltage amplitude in this measurement is linearly proportional to current amplitude. In the following of the description, the voltage amplitude in the figures may be described as current amplitude.

The preamble signal does not contain any user data. Its purpose is to assist locking of the burst-mode clock recovery to the received clock and to allow a measurement of the burst amplitude to set the data decision threshold at the OLT side.

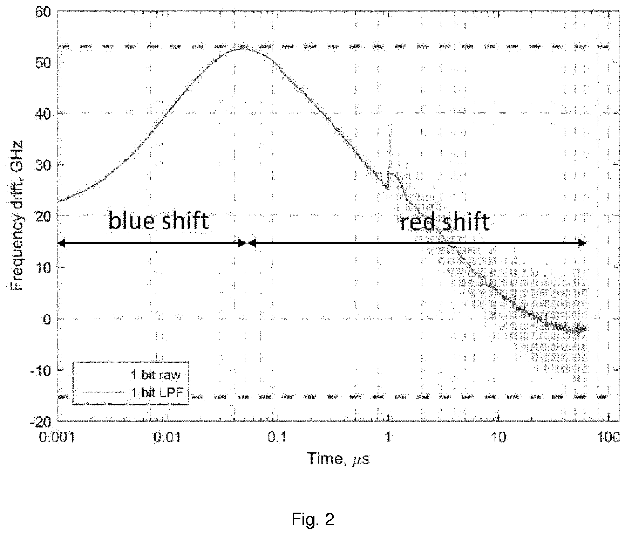

In Fig. 1, the normal preamble of the signal has a duration of 1 μs. The payload signal begins after 1 μs. The normal preamble comprises a long repeated sequence of "1010". A skilled person shall understand, the duration and the composition of the normal preamble shall not be limited to the given example. In another embodiment, the normal preamble may comprise a long repeated sequence of "1100" or "1000". Fig. 2 depicts a schematic frequency diagram of an optical frequency measurement result for a data burst using a normal preamble according to Fig.1.

As shown in Fig.2, the time shown on horizontal axis is logarithmic to emphasize fast effects at the beginning of the burst. The vertical axis represents the frequency drift from the median optical frequency. The dashed line in Fig. 2 depicts frequency excursion as measured at the optimum sampling point from "1" bits ("1 bit raw") and its low-pass-filtered version ("1 bit LPF").

As shown in Fig. 2, the frequency drift has two domains, which are specific to the laser design. The first domain, blue shift, starts from the beginning of the burst up to about 50 ns, with an increasing optical frequency. After this, the sign of frequency drift changes and the frequency decreases from 50 ns to the end of the burst. This is the red shift, caused by the thermal self-heating of the laser by the drive current. It can be seen from Fig. 2, after the payload starts after 1 μs, there is a user data - dependent drift.

In the example shown in Fig.2, the total burst length is 62.5 μs long. The repetition time is 125 μs. The excursion from the median optical frequency (corresponding to 0 on the vertical axis) to the point at which blue and red shift effects equalize (corresponding local maximum excursion at about 50 ns), is 53 GHz. The peak-to-peak spectral excursion with the normal preamble is -15 to +53 GHz, therefore 68 GHz in total.

This frequency drift can, in the worst case, cause the optical signal to tune out of the optical receiver filter passband (40 GHz passband filter for 100 GHz grid spacing) leading to a degraded bit error rate, or even unrecoverable burst errors. Large frequency drifts can also result in leaking of the optical power to the neighbouring channels, resulting in interference and increased bit error rate in this neighbouring channel.

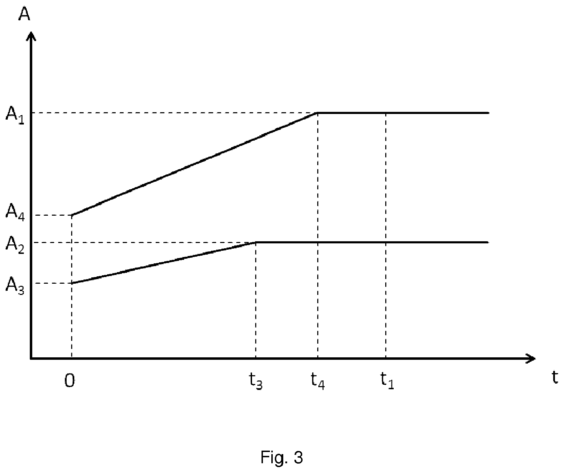

Fig. 3 depicts a schematic amplitude envelope diagram of a predetermined preamble according to an embodiment of the invention.

Similar to the normal preamble shown in Fig 1, the predetermined preamble signal in Fig. 3 also has a duration of the first time $t_1$, and comprises a repeated sequence composed of logical "1"(s) and logical "0"(s). The predetermined preamble may comprise a long repeated sequence of "1010". A skilled person shall understand, the composition of the predetermined preamble signal shall not be limited to the given example. In another embodiment, the predetermined preamble may comprise a long repeated sequence of "1100" or "1000".

However, the amplitude of the logical "1"s and logical "0"s in the predetermined preamble increases with the time.

As shown in Fig. 3, the current amplitude of the logical "0" in the predetermined preamble signal increases from a third value $A_3$ at the beginning of the predetermined preamble signal to the second value $A_2$ at a third time $t_3$ and being constant at the second value $A_2$ after the third time and the current amplitude of the logical "1" in the predetermined preamble signal increases from a fourth value $A_4$ at the beginning of the predetermined preamble signal to the first value $A_1$ at a fourth time $t_4$ and being constant at the first value $A_1$ after the fourth time $t_4$, wherein, $t_3 \leq t_4 \leq t_1$, $A_3 \leq A_2$, for $A_4 <$ $A_1$, and $A_3 < A_2$, for $A_4 = A_1$.

In an embodiment of the invention, the current amplitude of the logical "1" in the predetermined preamble signal may increase linearly, logarithmically, or exponentially. The skilled person shall understand, the increasing manner of the current amplitude is not limited to the given examples. Other functions that are enabling a monotonic increase from $A_4$ to $A_1$ in a time interval of $[0, t_4]$ are also possible.

Similarly, the current amplitude of the logical "0" in the predetermined preamble signal may also increase linearly, logarithmically, or exponentially. The skilled person shall understand, the increasing manner of the current amplitude is not limited to the given examples. Other functions that are enabling a monotonic increase from $A_3$ to $A_2$ in a time interval of $[0, t_3]$ are also possible.

In one embodiment, the current amplitude of logical "1"s and logical "0"s in the predetermined preamble increases logarithmically.

Specifically, the current amplitude of the logical "1" in the predetermined preamble signal increases according to a function:

$$A(t_{l1}) = \begin{cases} A_4 + (A_1 - A_4)\log_b\left[(b-1)(t_{l1}/t_4)+1\right] & \text{for } b > 0, b \neq 1 \\ A_4 + (A_1 - A_4)(t_{l1}/t_4) & \text{for } b = 1 \end{cases},$$

where $t_{l1}$ is a time of occurrence of a logical "1" from the beginning of the predetermined preamble and $b$ is an arbitrary positive constant.

The current amplitude of the logical "0" in the predetermined preamble signal increases according to a function:

$$A(t_{l0}) = \begin{cases} A_3 + (A_2 - A_3)\log_d\left[(d-1)(t_{l0}/t_3)+1\right] & \text{for } d > 0, d \neq 1 \\ A_3 + (A_2 - A_3)(t_{l0}/t_3) & \text{for } d = 1 \end{cases},$$

where $t_{l0}$ is a time of occurrence of a logical "0" from the beginning of the predetermined preamble and $d$ is an arbitrary positive constant.

In another embodiment of the present invention, the current amplitude of logical "1"s and logical "0"s in the predetermined preamble increases exponentially.

Specifically, the current amplitude of the logical "1" in the predetermined preamble signal may increase according to a function:

$$A(t_{l1}) = A_4 + (A_1 - A_4)(1+p)\left[1 - \left(\frac{p}{1+p}\right)^{(t_{l1}/t_4)}\right],$$

where $t_{l1}$ is a time of occurrence of a logical "1" from the beginning of the predetermined preamble and $p$ is an arbitrary constant and $p \neq 0$.

The current amplitude of the logical "0" in the predetermined preamble signal increases according to the function:

$$A(t_{l0}) = A_3 + (A_2 - A_3)(1+q)\left[1 - \left(\frac{q}{1+q}\right)^{(t_{l0}/t_3)}\right],$$

where $t_{l0}$ is a time of occurrence of a logical "0" from the beginning of the predetermined preamble and $q$ is an arbitrary constant and $q \neq 0$.

The skilled person shall understand, the current amplitude of the logical "1" and the current amplitude of the logical "0" do not have to increase in the same manner. In one embodiment, the current amplitude of the logical "1" may increase logarithmically, and the current amplitude of the logical "0" may increase exponentially. Other combinations of functions that are enabling a monotonic increase of the amplitude are also possible.

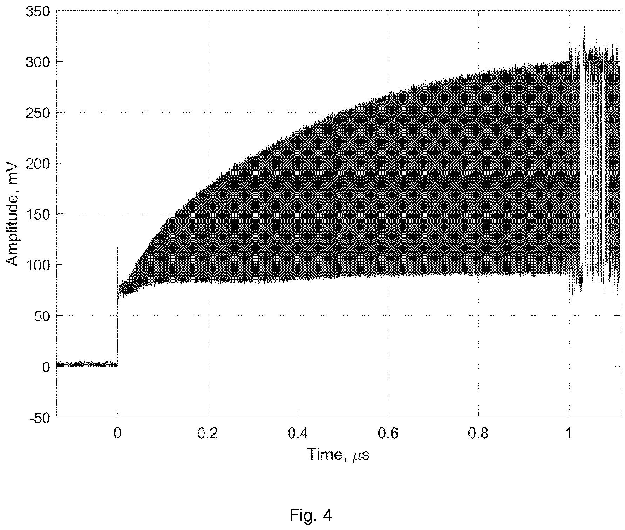

Fig. 4 depicts a schematic amplitude diagram of a data burst using a preamble signal according to an embodiment of the invention.

In the embodiment shown in Fig. 4, the preamble signal that is to be transmitted by the ONU is same as the predetermined preamble signal. The current amplitude of logical "1"s and logical "0"s in the predetermined preamble increases logarithmically to the nominal value. In another embodiment, the preamble signal that is to be transmitted by the ONU may be different from the predetermined preamble signal. As long as the electrical energy delivered by the preamble signal that is transmitted by the ONU from a beginning of the preamble signal to a second time $t_2$ is corresponding to an electrical energy delivered by the predetermined preamble signal from a beginning of the predetermined preamble signal to the second time $t_2$, $0<t_2 \leq t_1$, the fast blue shift can be mitigated.

In the embodiment shown in Fig. 4, the current amplitude of logical "1" and the current amplitude of logical "0" increase from the same value. At the beginning of the preamble signal, the current amplitude of logical "1" and the current amplitude of logical "0" are the same, i.e. $A_3 = A_4$ in Fig. 3. The skilled person should understand, in another embodiment of the invention, at the beginning of the preamble signal, the current amplitude of logical "1" may be higher than the current amplitude of logical "0", i.e. $A_4>A_3$ in Fig. 3.

The OLT is configured to receive the preamble signal with a duration of a first time $t_1$ from the ONU and receive a payload signal comprising user data after the preamble signal from the ONU.

According to an embodiment of the invention, the OLT is further configured to determine a threshold for sampling the payload signal based on the current amplitude of the logical "1"s in the preamble signal no earlier than $t_4$, and the current amplitude of logical "0"s in the preamble signal no earlier than $t_3$.

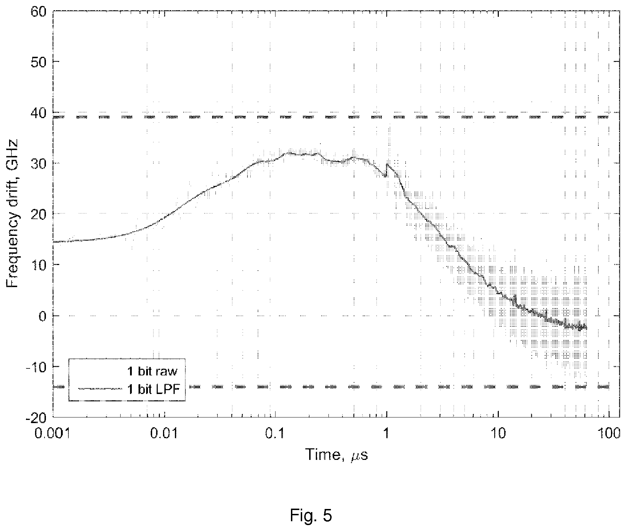

Fig. 5 depicts a schematic frequency diagram of an optical frequency measurement result for a data burst using the preamble signal according to Fig.4.

The excursion is within the range from to -15 to +38 GHz, therefore 53 GHz. Comparing to Fig. 2, this yields a reduction of 16 GHz in the peak-to-peak excursion. The maximum excursion does not happen at the point at which blue and red shift effects equalize, but at the beginning of the payload. The excursion from the median optical frequency to the point at which blue and red shift effects equalize is 31 GHz. Comparing to Fig. 2, it is reduced by 22 GHZ.

According to Fig. 5, the blue shift effect is mitigated and is no longer a dominant factor in the peak-to-peak excursion for the preamble signal specified in Fig. 4. Instead, the user data-dependent drift is limiting peak-to-peak excursion reduction.

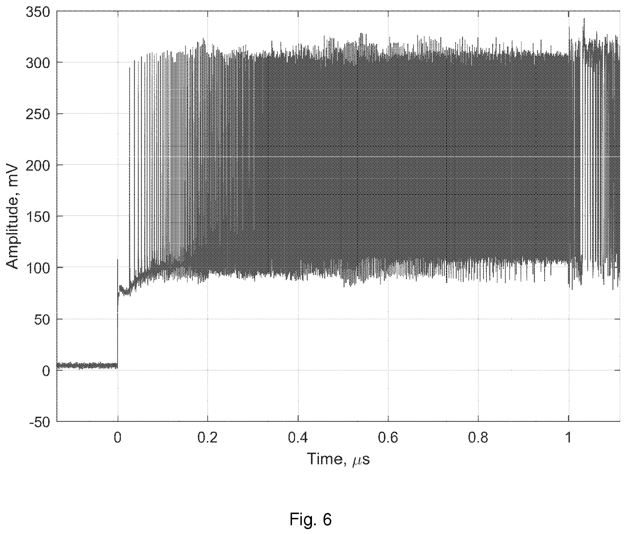

Fig. 6 depicts a schematic amplitude diagram of a preamble signal according to another embodiment of the invention.

According to Fig.6, there is provided another embodiment of the present invention that is easier to implement.

Similar to the embodiment shown in Fig.4, in the embodiment shown in Fig.6, the current amplitude of logical "1"s and logical "0"s in the predetermined preamble also increases logarithmically. However, according to the embodiment shown in Fig. 6, the preamble signal that is to be transmitted by the ONU is different from the predetermined preamble signal.

In the embodiment shown in Fig. 6, the preamble signal that is to be transmitted by the ONU comprises less logical "1"s than logical "0"s. Throughout the whole duration of the preamble signal that is to be transmitted by the ONU, the logical "1"s and the logical "0"s in the preamble signal have same current amplitude as those in the payload signal. Specifically, the logical "1"s in the preamble signal have a current amplitude of the first value $A_1$ and the logical "0"s in the preamble signal have a current amplitude of the second value $A_2$.

Specifically, some of the logical "1"s in the preamble signal that is to be transmitted by the ONU are replaced with "0"s in order to match the electrical energy delivered by the preamble signal from the beginning of the burst until the second time $t_2$ to the electrical energy delivered by the predetermined preamble from the beginning of the predetermined preamble signal to the second time $t_2$, $0<t_2 \leq t_1$.

According to the embodiment shown in Fig. 6, the OLT is further configured to determine a clock phase for the payload signal according to the logical "1"s comprised in the preamble signal.

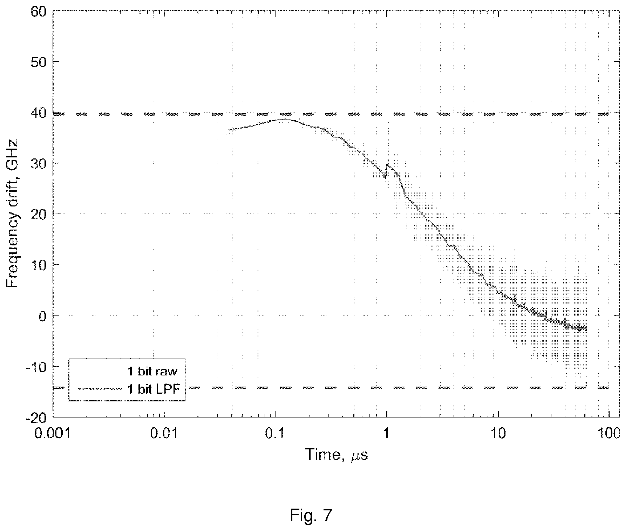

Fig. 7 depicts a schematic frequency diagram of an optical frequency measurement result for a data burst using the preamble signal according to Fig. 6.

As shown in Fig. 7, the result of the frequency drift measurement is very close to the result shown in Fig.5 for a data burst using the preamble signal according to Fig.4. The excursion is within the range from to -15 to +38 GHz. The peak-to-peak excursion in Fig. 7 is 53 GHz. Comparing to Fig. 2, this yields a reduction of 16 GHz in the peak-to-peak excursion.

A skilled person should understand, the possible embodiments of the present invention are not limited to the given examples. As long as the electrical energy delivered by the preamble signal that is to be transmitted by the ONU from a beginning of the preamble signal to the second time $t_2$ is less than an electrical energy delivered by the normal preamble signal from a beginning of the normal preamble signal to the second time $t_2$, $0<t_2 \leq t_1$, the blue shift effect can be mitigated.

**Claims**

1. A method of transmitting burst data in an optical network unit, comprising steps of:

   transmitting a preamble signal with a duration of a first time $t_1$ to an optical line terminal;
   transmitting a payload signal comprising user data after the preamble signal to the optical line terminal; wherein, logical "1"s in the payload signal have a current amplitude of a first value $A_1$, and logical "0"s in the payload signal have a current amplitude of a second value $A_2$, $A_2 < A_1$;
   wherein, an electrical energy delivered by the preamble signal from a beginning of the preamble signal to a second time $t_2$ is less than an electrical energy delivered by a normal preamble signal from a beginning of the predetermined preamble signal to the second time $t_2$, $0 < t_2 \leq t_1$;
   the normal preamble signal having a duration of the first time $t_1$, comprising a repeated sequence composed of logical "1"(s) and logical "0"(s); wherein, the logical "1" and logical "0" in the normal preamble signal have same current amplitude as those in the payload signal.

2. A method according to claim 1, wherein, the electrical energy delivered by the preamble signal from a beginning of the preamble signal to the second time $t_2$ is corresponding to an electrical energy delivered by a predetermined preamble signal from a beginning of the predetermined preamble signal to the second time $t_2$, the predetermined preamble signal having a duration of the first time $t_1$, comprising a repeated sequence composed of logical "1"(s) and logical "0"(s); a current amplitude of the logical "0" in the predetermined preamble signal increasing from a third value $A_3$ at the beginning of the predetermined preamble signal to the second value $A_2$ at a third time $t_3$ and being constant at the second value $A_2$ after the third time and a current amplitude of the logical "1" in the predetermined preamble signal increasing from a fourth value $A_4$ at the beginning of the predetermined preamble signal to the first value $A_1$ at a fourth time $t_4$ and being constant at the first value $A_1$ after the fourth time $t_4$, wherein, $t_3 \leq t_4 \leq t_1$, $A_3 \leq A_2$, for $A_4 < A_1$, and $A_3 < A_2$, for $A_4 = A_1$.

3. A method according to claim 2, wherein, the current amplitude of the logical "1" in the predetermined preamble signal increases according to a function:

$$A(t_{l1}) = \begin{cases} A_4 + (A_1 - A_4)\log_b[(b-1)(t_{l1}/t_4)+1] & \text{for } b > 0, b \neq 1 \\ A_4 + (A_1 - A_4)(t_{l1}/t_4) & \text{for } b = 1 \end{cases},$$

where $t_{l1}$ is a time of occurrence of a logical "1" from the beginning of the predetermined preamble and $b$ is an arbitrary positive constant.

4. A method according to claim 2, the current amplitude of the logical "0" in the predetermined preamble signal increases according to a function:

$$A(t_{l0}) = \begin{cases} A_3 + (A_2 - A_3)\log_d[(d-1)(t_{l0}/t_3)+1] & \text{for } d > 0, d \neq 1 \\ A_3 + (A_2 - A_3)(t_{l0}/t_3) & \text{for } d = 1 \end{cases},$$

where $t_{l0}$ is a time of occurrence of a logical "0" from the beginning of the predetermined preamble and $d$ is an arbitrary positive constant.

5. A method according to claim 2, the current amplitude of the logical "1" in the predetermined preamble signal increases according to a function:

$$A(t_{l1}) = A_4 + (A_1 - A_4)(1+p)\left[1 - \left(\frac{p}{1+p}\right)^{(t_{l1}/t_4)}\right],$$

where $t_{l1}$ is a time of occurrence of a logical "1" from the beginning of the predetermined preamble and $p$ is an arbitrary constant $p \neq 0$.

6. A method according to claim 2, the current amplitude of the logical "0" in the predetermined preamble signal increases according to the function:

$$A(t_{l0}) = A_3 + (A_2 - A_3)(1+q)\left[1 - \left(\frac{q}{1+q}\right)^{(t_{l0}/t_3)}\right],$$

where $t_{l0}$ is a time of occurrence of a logical "0" from the beginning of the predetermined preamble and $q$ is an arbitrary constant $q \neq 0$.

7. A method according to claim 2, wherein, $A_3 = A_4$.

8. A method according to claim 1, wherein, the repeated sequence comprised in the predetermined preamble signal is "10".

9. A method according to any one of the claims 1-8, wherein, the preamble signal is same as the predetermined preamble signal.

10. A method according to any one of the claims 1-8, wherein, the preamble signal comprises less logical "1"s than logical "0"s, where the logical "1"s in the preamble signal have a current amplitude of the first value $A_1$ and the logical "0"s in the preamble signal have a current amplitude of the second value $A_2$.

11. A method of receiving burst data in an optical line terminal, comprising steps of:

   receiving a preamble signal with a duration of a first time $t_1$ from an optical network unit;
   receiving a payload signal comprising user data after the preamble signal from the optical network unit;
   wherein, an electrical energy delivered by the preamble signal from a beginning of the preamble signal to a second time $t_2$ is less than an electrical energy delivered by a normal preamble signal from a beginning of the predetermined preamble signal to the second time $t_2$, $0 < t_2 \leq t_1$,
   the normal preamble signal comprising a repeated sequence composed of logical "1"(s) and logical "0"(s);
   wherein, the logical "1" and logical "0" in the normal preamble signal have same current amplitude as those in the payload signal.

12. A method according to claim 11, wherein, the electrical energy delivered by the preamble signal from a beginning of the preamble signal to a second time $t_2$ is corresponding to an electrical energy delivered by a predetermined preamble signal from a beginning of the predetermined preamble signal to the second time $t_2$, $0 < t_2 \leq t_1$,
the predetermined preamble signal having a duration of the first time $t_1$, comprising a repeated sequence composed of logical "1"(s) and logical "0"(s); a current amplitude of the logical "0" in the predetermined preamble signal increasing from a third value $A_3$ at the beginning of the predetermined preamble signal to the second value $A_2$ at a third time $t_3$ and being constant at the second value $A_2$ after the third time $t_3$, and a current amplitude of the logical "1" in the predetermined preamble signal increasing from a fourth value $A_4$ at the beginning of the predetermined preamble signal to the first value $A_1$ at a fourth time $t_4$ and being constant at the first value $A_1$ after the fourth time $t_4$, wherein, $t_3 < t_4 \leq t_1$, $A_3 \leq A_2$, for $A_4 < A_1$ and $A_3 < A_2$, for $A_4 = A_1$,
the method further comprising a step of:

   determining a threshold for sampling the payload signal based on the current amplitude of the logical "1"s in the preamble signal no earlier than $t_4$ and the current amplitude of logical "0"s in the preamble signal no earlier than $t_3$.

13. A method according to claim 11, further comprising a step of:

   determining a clock phase for the payload signal according to the logical "1"s comprised in the preamble signal.

14. An optical network unit, configured to:

   transmit a preamble signal with a duration of a first time $t_1$ to an optical line terminal;
   transmit a payload signal comprising user data after the preamble signal to the optical line terminal; wherein, logical "1"s in the payload signal have a current amplitude of a first value $A_1$, and logical "0"s in the payload signal have a current amplitude of a second value $A_2$, $A_2 < A_1$;

wherein, an electrical energy delivered by the preamble signal from a beginning of the preamble signal to a second time $t_2$ is less than an electrical energy delivered by a normal preamble signal from a beginning of the predetermined preamble signal to the second time $t_2$, $0 < t_2 \leq t_1$;

the normal preamble signal having a duration of the first time $t_1$, comprising a repeated sequence composed of logical "1"(s) and logical "0"(s); wherein, the logical "1" and logical "0" in the normal preamble signal have same current amplitude as those in the payload signal.

**15.** An optical line terminal, configured to:

receive a preamble signal with a duration of a first time $t_1$ from an optical network unit;
receive a payload signal comprising user data after the preamble signal from the optical network unit;
wherein, an electrical energy delivered by the preamble signal from a beginning of the preamble signal to a second time $t_2$ is less than an electrical energy delivered by a normal preamble signal from a beginning of the predetermined preamble signal to the second time $t_2$, $0 < t_2 \leq t_1$;
the normal preamble signal comprising a repeated sequence composed of logical "1"(s) and logical "0"(s); wherein, the logical "1" and logical "0" in the normal preamble signal have same current amplitude as those in the payload signal.

Fig. 1

Fig. 2

Fig. 3

Fig. 4

Fig. 5

Fig. 6

Fig. 7

Europäisches
Patentamt

European
Patent Office

Office européen
des brevets

# EUROPEAN SEARCH REPORT

Application Number

EP 17 16 4387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/381300 A1 (ROBERTS HAROLD A [US]) 31 December 2015 (2015-12-31) | 1,7-15 | INV. H04B10/50 H01S5/00 H04B10/54 H04B10/572 |
| A | * page 2, paragraph 19 - paragraph 20; figures 1-5 * <br> * page 3, paragraph 29 - paragraph 30 * <br> ----- | 2-6 | |
| A | POEHLMANN WOLFGANG ET AL: "Wavelength drift of burst-mode DML for TWDM-PON [invited]", JOURNAL OF OPTICAL COMMUNICATIONS AND NETWORKING, INSTITUTE OF ELECTRICAL AND ELECTRONICS ENGINEERS, US, vol. 7, no. 1, 1 January 2015 (2015-01-01) , XP011571352, ISSN: 1943-0620, DOI: 10.1364/JOCN.7.000A44 [retrieved on 2015-01-26] * Section IV/A * <br> ----- | 1-15 | |
| A | US 2015/063812 A1 (DOVE JASON [US] ET AL) 5 March 2015 (2015-03-05) * page 1, paragraph 14 - page 4, paragraph 32; figures 1,6 * <br> ----- | 1-15 | TECHNICAL FIELDS SEARCHED (IPC) <br><br> H04B H01S |

The present search report has been drawn up for all claims

| Place of search | Date of completion of the search | Examiner |
|---|---|---|
| Munich | 19 September 2017 | Koch, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 4387

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2017

| Patent document cited in search report | | Publication date | Patent family member(s) | Publication date |
|---|---|---|---|---|
| US 2015381300 | A1 | 31-12-2015 | NONE | |
| US 2015063812 | A1 | 05-03-2015 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. SIMON et al.** Focus on Time-Dependent Wavelength Drift of DMLs Under Burst-Mode Operation for NG-PON2. *Journal of Lightwave Technology,* 2016, vol. 34 (13), 3148-3154